Europäisches Patentamt

European Patent Office

Office européen des brevets

(19)

(11) Numéro de publication: **0 034 959**
**B1**

(12) **FASCICULE DE BREVET EUROPEEN**

(45) Date de publication du fascicule du brevet:
**10.08.83**

(51) Int. Cl.³: **B 25 J 11/00**

(21) Numéro de dépôt: **81400136.8**

(22) Date de dépôt: **29.01.81**

(54) **Système d'équilibrage pour pantin d'apprentissage.**

(30) Priorité: **05.02.80 FR 8002428**

(43) Date de publication de la demande:
**02.09.81 Bulletin 81/35**

(45) Mention de la délivrance du brevet:
**10.08.83 Bulletin 83/32**

(84) Etats contractants désignés:
**DE GB IT SE**

(56) Documents cités:
**FR-A-1 046 608**
**FR-A-138 902**
**FR-A-2 061 941**
**FR-E-86 927**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Le Rouzo, Jean, 50, rue Bobillot, F-75013 Paris
(FR)**

(74) Mandataire: **Srour, Elie et al, 8 & 10 Avenue Emile Zola,
F-92109 Boulogne Billancourt (FR)**

ACTORUM AG

## Système d'équilibrage pour pantin d'apprentissage

La présente invention est relative à un système d'équilibrage pour pantin d'apprentissage.

Il est connu depuis un certain temps d'utiliser des robots pour effectuer une peinture de finition de bonne qualité sur des objets de grandes dimensions tels que des carrosseries de voitures automobiles. Une telle application présente bien des problèmes si l'on veut que le robot soit apte à effectuer de façon pleinement satisfaisante les raccordements entre surfaces extérieures élémentaires, la peinture de surfaces tourmentées et celle des surfaces intérieures d'une carrosserie.

A cet effet, on doit commencer par définir une trajectoire d'application de la peinture qui doit être continue et conduire à un revêtement d'épaisseur uniforme sans bavures et sans «coulures». L'enregistrement de la trajectoire doit être continu. Les positions successives et la vitesse de parcours en chaque point sont importantes et doivent être enregistrées pour permettre ensuite au robot de peinture de reproduire automatiquement la trajectoire désirée avec toutes ses caractéristiques. On procède donc à l'apprentissage.

En apprentissage direct, l'opérateur «tient la main du robot». Si une telle méthode est concevable dans le cas de petits robots, elle se trouve rapidement exclue du fait des inerties et des frottements inévitables d'autant plus importants que le robot est de grande taille. Dès que le manipulateur est rapide et puissant, la manœuvre directe présente même un danger réel pour l'opérateur.

Il est alors connu de remplacer le robot par un pantin pour la phase d'apprentissage et l'enregistrement des trajectoires. Le construction du pantin en structure légère respecte la géométrie du robot. Malgré cette légèreté de la structure, son équilibrage devient indispensable afin de soulager l'opérateur chargé de la manœuvre du pantin.

Dans le cas d'un pantin à six axes, l'expérience montre qu'un équilibrage approché à l'aide de contrepoids et d'un ressort compensateur allège correctement le pantin.

Dans le cas d'une trajectoire d'application de peinture sur une carrosserie d'automobile dont on veut recouvrir successivement l'extérieur puis l'intérieur, l'expérience montre que l'on doit avoir recours à un robot à sept axes et l'équilibrage du pantin correspondant à sept axes se complique singulièrement.

Pour résoudre ce problème, la présente invention utilise un type connu de système d'équilibrage pour pantin d'apprentissage à au moins six axes comportant au moins: un premier axe vertical, un deuxième axe horizontal, un premier bras pivotant dans un plan vertical à l'intersection du premier axe et du second axe par une de ses extremités et qui supporte à sa seconde extrémité un troisième axe horizontal, un second bras qui pivote dans le même plan vertical autour du point commun au premier bras et au troisième axe par une de ses extrémités et qui support à sa seconde extrémité un quatrième axe, un troisième bras débattant dans un plan normal au plan défini par le second bras et le quatrième axe autour de leur point commun par une de ses extrémités et qui supporte à sa seconde extrémité une trompe polyarticulée et un pistolet et faisant usage de contrepoids pour son équilibrage, système dans lequel l'équilibrage du pantin est réalisé par disposition homothétique de la structure du pantin avec transmission d'angle et le centre d'homothétie est situé à l'intersection du premier axe et du second axe; suivant l'invention, ce système est remarquable en ce que cette disposition homothétique avec transmission d'angle s'effectue relativement à son second axe et à ses trois premiers bras et en ce qu'il comporte au moins un parallélogramme dont les côtés sont respectivement parallèles au premier bras et au second bras un pantin et en ce qu'un côté du parallélogramme qui supporte le contrepoids relatif au troisième bras est entrainé en rotation par un système de poulies asservies à ce troisième bras.

Suivant une première caractéristique de réalisation, l'équilibrage est réalisé avec une transmission mécanique.

Suivant une seconde caractéristique de réalisation, l'équilibrage est fractionné et déjeté de chaque côté du premier axe.

Suivant une troisième caractéristique de réalisation, l'équilibrage est réalisé dans l'axe grâce à un premier axe virtuel.

Suivant une quatrième caractéristique de réalisation, l'équilibrage est déjeté sur un des côtés du premier axe.

D'autres caractéristiques ressortiront de la description qui suit et qui n'est donnée qu'à titre d'exemple. A cet effet, on se reportera au dessin joint dans lequel:

— la figure 1 représente un pantin d'apprentissage équipé d'un premier mode de réalisation d'un système d'équilibrage suivant la présente invention, à savoir un système d'équilibrage fractionné et déjeté de chaque côté de l'axe fondamental du pantin,

— la figure 2 représente un pantin d'apprentissage équipé d'un second mode de réalisation d'un système d'équilibrage suivant la présente invention, à savoir un système d'équilibrage déjeté sur un des côtés de l'axe fondamental du pantin,

— la figure 3 représente un pantin d'apprentissage équipé d'un troisième mode de réalisation d'un système d'équilibrage suivant la présente invention qui se situe dans l'axe fondamental du pantin.

Les mêmes références désignent les mêmes éléments sur les différentes figures.

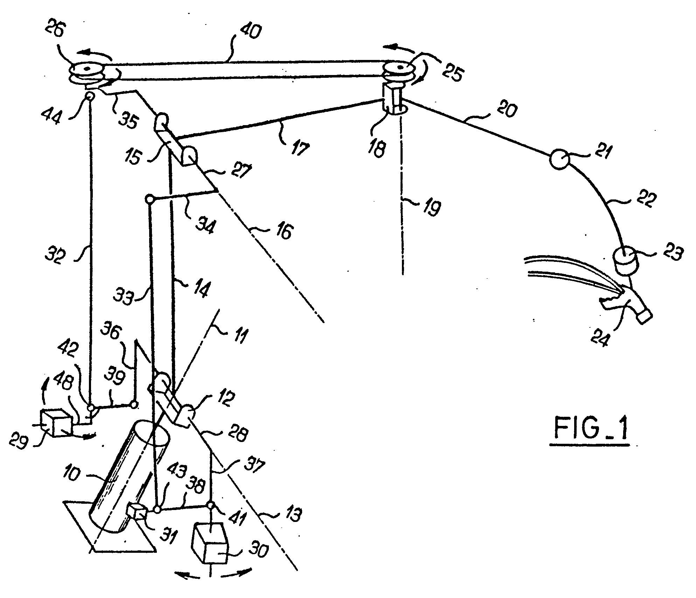

Suivant le mode de réalisation illustré à la figure 1, le pantin d'apprentissage comporte une table de rotation 10 à axe vertical 11 constituant le premier axe, un bras 14 constituant le premier bras et un avant-bras 17 constituant le deuxième bras qui se déplacent dans un plan vertical. Cet ensemble est articulé au moyen de deux coudes 12 et 15 ayant chacun un axe horizontal 13 et 16 respectivement. Un troisième bras 20 débat dans un plan normal au plan défini par les bras 14 et 17 autour d'un coude 18 admettant un quatrième axe 19. Ce troisième bras 20 porte à son extrémité éloignée du coude 18, par l'intermédiaire d'une fixation 21, une trompe polyarticulée 22 capable de balayer un certain volume autour de cette fixation. Cette trompe polyarticulée peut être du type décrit dans la demande de brevet N° 77/02 387 (FR-A-2 378 617) déposée par la demanderesse le 23 janvier 1977 pour «bras polyarticulé pour robot ou automate». Le volume balayé par ladite trompe est rapporté au cinquième et au sixième axes du pantin et ladite trompe 22 supporte à sa seconde extrémité éloignée de la fixation 21 une seconde fixation 23 par laquelle elle se raccorde à un septième axe qui est celui d'un pistolet de peinture 24.

Cette structure du pantin est connue et classique. L'invention porte sur un système permettant d'équilibrer les différents poids correspondant aux éléments essentiels du pantin de façon à parvenir à un équilibre indifférent pour l'ensemble, ce qui réduit au maximum la fatigue de l'opérateur qui manipule le pistolet 24 à l'extrémité du pantin.

La table de rotation 10 avec son axe vertical 11 ne demande pas d'équilibrage. La trompe 22 et le pistolet 24 dont l'influence n'est pas déterminante sont traités globalement avec le troisième bras 20 et estimés correspondre à un poids $P_3$. Suivant l'invention, les poids $P_1$ correspondant au premier bras 14, $P_2$ correspondant au second bras 17 et $P_3$ défini précédemment sont équilibrés homothétiquement par rapport au deuxième axe 13. A cet effet et suivant la figure 1, un premier étrier 28 est disposé par sa partie centrale suivant l'axe 13. Cet étrier 28 porte un premier bras latéral 37 parallèle au bras 14 du pantin et qui supporte à son extrémité un poids 30 correspondant aux poids $P_1$ du bras 14. Un second étrier 27 est disposé avec sa partie centrale suivant l'axe 16. Il est solidaire du coude 15 et ses bras latéraux 34, 35 sont dans le plan défini par l'axe 16 et le second bras 17. De même, le premier étrier 28 avec ses bras latéraux 36, 37 est dans le plan défini par l'axe 13 et le premier bras 14 du pantin. L'extrémité libre du bras latéral 35 du second étrier 27 est reliée de manière articulée au moyen d'une première tringlerie 32, 39 à l'extrémité libre du bras latéral 36 du premier étrier 28 et, d'une manière analogue, l'extrémité libre du bras latéral 34 du second étrier 27 est reliée de manière articulée au moyen d'une seconde tringlerie 33, 38 au bras latéral 37 du premier étrier 28 en un point 41 situé en deçà de l'extrémité supportant le poids 30. Le bras 39 de la première tringlerie se prolonge au delà du point d'articulation 42 par un bras 38 qui supporte à son extrémité libre un poids 29 correspondant au poids $P_3$ défini précédemment. D'une manière analogue, le bras 38 de la seconde tringlerie se prolonge au-delà du point d'articulation 43 et supporte à son extrémité libre un poids 31 correspondant au poids $P_2$ du second bras 17 du pantin. L'ensemble constitué par les deux étriers 27 et 28 et leurs bras latéraux et les deux tringleries 32, 39, d'une part, 33, 38, d'autre part, forme un système symétrique, Sur l'axe 19 du cude 18, à l'extérieur de ce dernier, est montée une première poulie 25. La poulie 25 appartient au bras 20 sur lequel elle est fixée. A l'extrémité supérieure de la partie 32 de la première tringlerie 32, 39 au-delà de son point de raccordement 44 avec le bras latéral 35 du second étrier 27 est montée une seconde poulie 26 et les deux poulies 25 et 26 qui sont toutes deux dans un plan parallèle au plan défini par le second bras 17 et l'axe 16 sont reliées l'une à l'autre par une courroie rigide 40. La poulie 26 appartient à la tringlerie 32 dont elle est solidaire en rotation.

Le contrepoids 30, réglable en position le long du prolongement 37 du bras 14 au-delà de l'axe horizontal 13, équilibre le poids dudit bras 14 ainsi que l'effort engendré sur l'axe 13 par le poids 31 correspondant au bras 17 équipé.

Le contrepoids 31, réglable en position le long de la tringlerie 38, équilibre le bras 17. Son débattement dans un plan parallèle au plan de débattement du bras 17 est assuré par le parallélogramme 34, 33, 38 et 37. Ce contrepoids 31 est fixé sur la biellette 38 articulée en 41 sur le prolongement 37 du bras 14.

Le contrepoids 29, réglable en position le long de la tringlerie 39, équilibre l'ensemble du bras 20, de la trompe 22 et du pistolet 24. Son débattement dans un plan parallèle au plan de débattement du bras 20 est assuré par le parallélogramme 35, 32, 39 et 36. La poulie 25 solidaire en rotation du bras 20 entraîne en rotation le contrepoids 29 par l'intermédiaire de la poulie 26, de même diamètre, tourillonnant dans le bras 17 et liée à l'axe 48 du contrepoids 29 par l'intermédiaire de l'arbre 32 et deux joints de cardan 44 et 42. Cet arbre 32 matérialise l'un des côtés du parallélogramme 35, 32, 39 et 36.

Grâce à ce système d'équilibrage, quelle que soit la position du pantin sous l'action d'un opérateur manipulant le pistolet 24, l'ensemble est toujours en équilibre indifférent, ce qui réduit beaucoup la fatigue de l'opérateur.

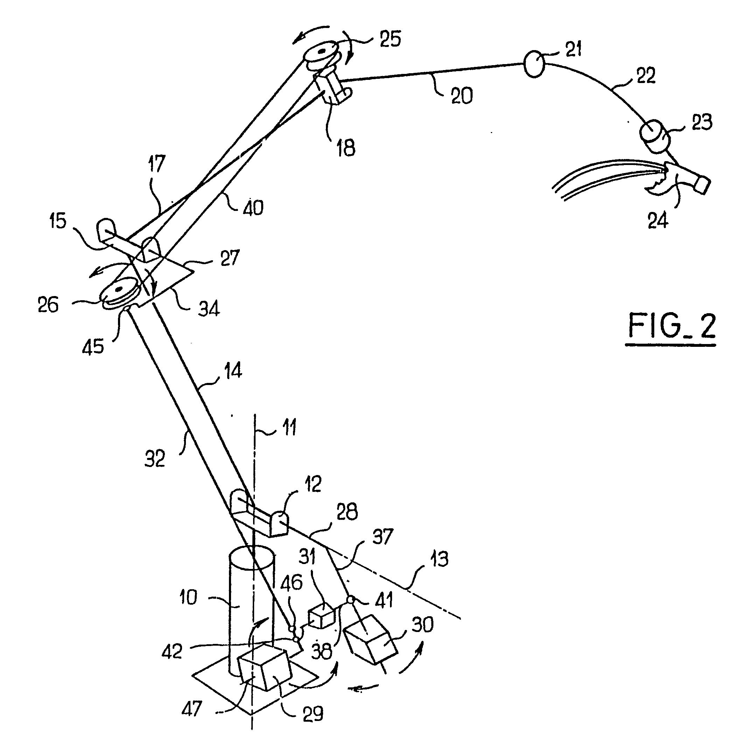

La figure 2 illustre un second mode de réalisation dans lequel l'équilibrage est déjeté sur un des côtés du premier axe 11 du pantin. Selon ce mode de réalisation, le premier étrier 28 ne possède plus qu'un seul bras latéral 37 parallèle au bras 14 du pantin et le second étrier 27 qu'un seul bras latéral 34 parallèle au bras 17 du pantin. Dans ces conditions, il n'existe plus qu'un seul parallélogramme latéral 37, 38, 32, 34. Le contrepoids 31 qui équilibre le bras 17 est réglable en position le long de la biellette 38 entre ses points de fixation 41 et 42. Dans ce mode de réalisation, la poulie 25 solidaire en rotation du bras 20 entraîne en rotation le contrepoids 29 par l'intermédiaire de la pouile 26, de même diamètre, tourillonnant dans le bras 17 et liée à l'axe 47 du contrepoids 29 par l'intermédiaire de l'arbre 32 et de deux joints de cardan 45 et 46. L'arbre 33 matérialise l'un des côtés du parallélogramme 37, 38, 32, 34.

L'équilibrage déjeté sur l'un des côtés du premier axe 11 du pantin permet une construction simple de cet axe et dégage totalement und des faces du pantin. Il offre la possibilité de déjeter le mécanisme d'équilibrage à droite ou à gauche si la configuration du site l'exige.

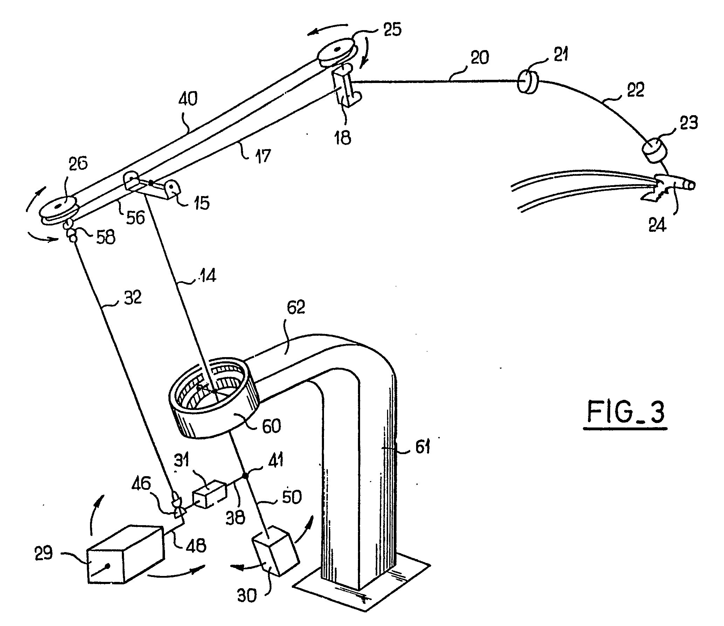

La figure 3 illustre un troisième mode de réalisation selon lequel l'équilibrage de toute la structure du pantin s'effectue dans l'axe. Tous les efforts passent donc en ligne évitant les déformations de la structure.

Suivant la réalisation de la figure 3, le pantin est supporté par une table de rotation 61 ayant la forme générale d'une équerre: la partie horizontale 62 de cette dernière se termine par un roulement annulaire 60 dans lequel tourillonne le premier bras 14 du pantin. Ce premier bras 14 se continue au-dessous de roulement annulaire 60 par une partie 50 sur laquelle est fixé le contrepoids 30 dans une position réglable. Le second bras 17 se poursuit au-delà du coude 15 par une partie 56 à l'extrémité de laquelle tourillonne la poulie 26 par l'intermédiaire d'un joint de cardan 58. Un arbre 32 s'étend à partir du joint de cardan 58 parallèlement au bras 14 du pantin. L'arbre 32 se termine à la partie inférieure en tourillonnant dans un joint de cardan 46. Le contrepoids 31 qui équilibre le bras 17 est supporté en position réglable sur une biellette 38 qui prend appui par une extrémité en 41 sur le prolongement 50 du bras 14 et par sa seconde extrémité sur l'arbre 32 par l'intermédiaire du joint de cardan 46. Le contrepoids 29 qui équilibre le bras 20 et ses annexes est supporté de manière réglable par une biellette 48 formant équerre avec l'arbre 32 et qui est entraînée en rotation autour de l'arbre 32 par l'intermédiaire des poulies 25, 26 et des joints de cardan 58 et 46. Ce système d'équilibrage est très simple et repose sur la constitution d'un seul parallélogramme comprenant le bras 14, l'arbre parallèle 32, la biellette 38 et le prolongement 56. La rotation du bras 20 autour du coude 18 provoque la rotation concomitante du contrepoids d'équilibrage 29 autour de l'arbre 32 par le jeu des poulies 25, 26 et des joints de cardan 58 et 46.

**Revendications**

1. Système d'équilibrage pour pantin d'apprentissage à au moins six axes comportant au moins un premier axe vertical (11), un second axe horizontal (13), un premier bras (14) qui pivote dans un plan vertical autour du point d'intersection du premier axe et du second axe à une de ses extrèmités et qui supporte à sa seconde extrèmité un troisième axe horizontal (16), un second bras (17) qui pivote à une de ses extrémités dans le même plan vertical autour du point commun au premier bras (14) et au troisième axe (16) et qui supporte à sa seconde extrèmité un quatrième axe (19), un troisième bras (20) débattant dans un plan normal au plan défini par le second bras (17) et le quatrième axe (19) autour de leur point commun par une de ses extrèmités et supportant par sa seconde extrèmité une trompe polyarticulée (22) et un pistolet (24) et faisant usage de contrepoids pour son équilibrage, dans lequel ledit système d'équillibrage est réalisé par disposition homothétique de la structure du pantin avec transmission d'angle (25, 26, 42, 41) et le centre d'homothétie est situé à l'intersection du premier axe (11) et du second axe (13), caractérisé en ce que ladite disposition homothétique avec transmission d'angle (25, 26, 42, 41) s'effectue relativement à son second axe (13) et à ses trois premiers bras (14, 17, 20) et en ce qu'il comporte au moins un parallèlogramme (33, 34, 37, 48) (34, 35, 32, 39) dont les côtés sont respectivement parallèles au premier bras (14) et au second bras (17) du pantin et en ce qu'un côté (39) du parallélogramme qui supporte le contrepoids (29) relatif au troisième bras (20) est entrainé en rotation par un système de poulies (25, 26) asservies audit troisième bras.

2. Système d'équilibrage suivant la revendication 1 dans lequel le contrepoids (30) correspondant au premier bras (14) du pantin est supporté par un prolongement du côté (37, 14) du parallélogramme qui est parallèle au côté (32) supportant le contrepoids (29) relatif au troisième bras (20) et le contrepoids (31) relatif au second bras (17) est porté par le côté (38) du parallèlogramme qui est parallèle à ce second bras et inférieur au premier axe horizontal (13) du pantin, caractérisé en ce que le côté (37) du parallèlogramme qui supporte le contrepoids (30) relatif au premier bras (14) est constitué par une première équerre (28, 37) pivotant autour dudit premier axe horizontal (13).

3. Système d'équilibrage suivant la revendication 2, caractérisé en ce que le côté (34) du parallèlogramme qui est parallèle au côté (38) supportant le contrepoids (31) relatif au second bras (17) est constitué par un montant latéral d'une seconde équerre (27, 34) rigidement solidaire du troisième axe (16) du pantin et située dans un plan défini par ledit troisième axe (16) et le deuxième bras (17).

4. Système d'équilibrage suivant la revendication 2, caractérisé en ce que l'une des poulies (26) de renvoi d'angle est montée à l'aide d'un joint de cardan (45) à l'intersection de l'extrémité libre du montant latéral (34) de la seconde équerre et du côté (32) du parallélogramme supportant le contrepoids (29) relatif au troisième bras (20).

5. Système d'équilibrage suivant la revendication 1, caractérisé en ce qu'il comporte deux parallélogrammes (32, 35, 36, 39; 33, 34, 37, 38) disposés parallèlement et symétriquement par rapport au plan défini par les deux premiers bras (14, 17) du pantin.

6. Système d'équilibrage suivant le revendication 5, caractérisé en ce que dans le cas de deux parallélogrammes disposés parallèlement et symétriquement par rapport au plan défini par les deux premiers bras, ces deux parallélogrammes reposent sur deux équerres dont la première (36, 28, 37) a sa partie médiane (28) confondue avec le premier axe (13) horizontal du pantin et oscille autour de cet axe tandis que la seconde (35, 27, 34) est rigidement solidaire par sa partie médiane (27) du seconde axe (16) horizontal du pantin et tout entière située dans le plan défini par ledit second axe (16) et le deuxième bras (17).

7. Système d'équilibrage suivant la revendication 6, caractérisé en ce que le contrepoids (30) relatif au premier bras (14) est supporté par un prolongement d'un des côtés (37) du premier parallélogramme tandis que le contrepoids (29) relativ au troisième bras (20) est supporté par un prolongement d'un des côtés (32) du second parallélogramme par l'intermédiaire d'une troisième équerre (48).

8. Système d'équilibrage suivant la revendication 7, caractérisé en ce que le contrepoids (31) relatif au second bras (17) est supporté par un prolongement d'un des côtés (38) du premier parallélogramme parallèle audit second bras (17).

9. Système d'équilibrage suivant la revendication 1, caractérisé en ce que le pantin est supporté par une table de rotation (61) ayant la forme d'une équerre dont la partie horizontale (62) se termine par un roulement annulaire (60) dans lequel tourillonne le premier bras (14) du pantin qui se poursuit en dessous dudit roulement annulaire (60) par une partie rectiligne (50) à l'extrémité de laquelle est fixée dans une position réglable le contrepoids (30) relatif audit premier bras (14) et sur laquelle, dans une poisition intermédiaire, est fixée une biellette (38) disposée parallèlement au second bras (17) et supportant dans une position réglable le contrepoids (31) relatif audit second bras, ledit parallélogramme (14, 56, 38, 32) étant construit sur ledit premier bras (14) et ladite biellette (38).

10. Système d'équilibrage suivant la revendication 9, caractérisé en ce que ledit second bras (17) à son extrémité relative au premier bras (14) se poursuit au-delà du coude (15) par une portion rigide (56) à l'extrémité de laquelle tourillonne une des pulies (26) de renvoi d'angle par l'intermédiaire d'un second joint de cardan (58).

11. Système d'équilibrage suivant la revendication 10, caractérisé en ce que le côté (32) du parallélogramme d'équilibrage qui s'étend parallèlement au premier bras du pantin (14) à partir de la seconde extrémité de ladite portion rigide (56) supporte à son extrémité inférieure une équerre (48) sur laquelle est fixé en position réglable le contrepoids (29) relatif au troisième bras (20), laquelle est susceptible de tourillonner par l'intermédiaire d'un joint de cardan et de tourner autour dudit côté (32).

**Patentansprüche**

1. Ausgleichsystem für eine Lehr-Gelenkpuppe mit mindestens sechs Achsen, welche aufweist: wenigstens eine erste senkrechte Achse (11); eine zweite waagerechte Achse (13); einen ersten Arm (14), der an einem seiner Enden um den Schnittpunkt der ersten Achse und der zweiten Achse in einer senkrechten Ebene schwenkbar ist und an seinem zweiten Ende eine dritte waagerechte Achse (16) trägt; einen zweiten Arm (17), der an einem seiner Enden in derselben senkrechten Ebene um den dem ersten Arm (14) und der dritten Achse (16) gemeinsamen Punkt schwenkbar ist und an seinem zweiten Ende eine vierte Achse (19) trägt; einen dritten Arm (20), dessen eines Ende in einer zu der durch den zweiten Arm (17) und die vierte Achse (19) bestimmten Ebene senkrechten Ebene, um ihren gemeinsamen Punkt beweglich ist und dessen zweites Ende einen mehrgelenkigen Rüssel (22) und eine Spritzpistole (24) trägt und bei dem Gegengewichte für sein Auswiegen vorgesehen sind, wobei das Ausgleichsystem durch homothetische Anordnung der Puppenstruktur mit Winkelübertragung (25, 26, 42, 41) gebildet ist und der Homothetiemittelpunkt auf dem Schnittpunkt der ersten Achse (11) und der zweiten Achse (13) liegt, dadurch gekennzeichnet, dass die homothetische Anordnung mit Winkelübertragung (25, 26, 42, 41) in bezug auf ihre zweite Achse (13) und auf ihre drei ersten Arme (14, 17, 20) erzielt ist, und dass es mindestens ein Parallelogramm (33, 34, 37, 38) (34, 35, 32, 39) aufweist, dessen Seiten zum ersten Arm (14) bzw. zweiten Arm (17) der Puppe parallel sind, und dass eine Seite (39) des Parallelogramms, die das dem dritten Arm (20) zugeordnete Gegengewicht (29) trägt, durch ein System von durch den dritten Arm gesteuerten Riemenscheiben (25, 26) gedreht wird.

2. Ausgleichsystem nach Anspruch 1, in welchem das dem ersten Arm (14) der Gelenkpuppe entsprechende Gegengewicht (30) von einer Verlängerung derjenigen Seite (37, 14) des Parallelogramms getragen wird, die zu derjenigen Seite (32) parallel ist, welche das dem dritten Arm (20) entsprechende Gegengewicht trägt und das dem zweiten Arm (17) entsprechende Gegengewicht (31) von derjenigen Seite (38) des Parallelogramms getragen wird, die zu diesem zweiten Arm parallel ist und unterhalb der ersten waagerechten Achse (13) der Gelenkpuppe liegt, dadurch gekennzeichnet, dass diejenige Seite (37) des Parallogramms, die das dem ersten Arm (14) entsprechende Gegengewicht (30) trägt, aus einem um die erste waagerechte Achse (13) drehbaren ersten Winkelstück (28, 37) besteht.

3. Ausgleichsystem nach Anspruch 2, dadurch gekennzeichnet, dass die zu der das dem zweiten Arm (17) entsprechende Gegengewicht (31) tragenden Seite (38) parallele Seite (34) des Parallelogramms durch einen seitlichen Schenkel eines zweiten Winkelstückes (27, 34) besteht, das mit der dritten Achse (16) der Gelenkpuppe starr verbunden ist und in einer durch die dritte Achse (16) und den zweiten Arm (17) bestimmten Ebene liegt.

4. Ausgleichsystem nach Anspruch 2, dadurch gekennzeichnet, dass eine der Umlenkriemenscheiben (26) vermittels eines Kardan-Gelenks (45) am Schnittpunkt des freien Endes des seitlichen Schenkels (34) des zweiten Winkelstückes und der das dem dritten Arm (20) entsprechende Gegengewicht (29) tragenden Seite (32) des Parallelogramms angeordnet ist.

5. Ausgleichsystem nach Anspruch 1, dadurch gekennzeichnet, dass es zwei Parallelogramme (32, 35, 36, 39; 33, 34, 37, 38) aufweist, die parallel und symmetrisch in bezug auf die durch die zwei ersten Arme (14, 17) der Gelenkpuppe bestimmte Ebene angeordnet sind.

6. Ausgleichsystem nach Anspruch 5, dadurch gekennzeichnet, dass bei zwei parallel und symmetrisch in bezug auf die durch die zwei ersten Arme bestimmte Ebene angeordneten Parallelo-

grammen, die letzteren auf zwei Winkelstücken angeordnet sind, wobei der Mittelteil (28) des ersten Winkelstücks (36, 28, 37) mit der ersten waagerechten Achse (13) der Gelenkpuppe zusammenfällt und um diese Achse schwenkbar ist, während das zweite Winkelstück (35, 27, 34) an seinem Mittelteil (27) mit der zweiten waagerechten Achse (16) starr verbunden ist und gänzlich in der durch diese zweite Achse (16) und den zweiten Arm (17) bestimmten Ebene liegt.

7. Ausgleichsystem nach Anspruch 6, dadurch gekennzeichnet, dass das dem ersten Arm (14) entsprechende Gegengewicht (30) von einer Verlängerung einer der Seiten (37) des ersten Parallelogramms getragen wird, während das dem dritten Arm (20) entsprechende Gegengewicht (29) von einer Verlängerung einer der Seiten (32) des zweiten Parallelogramms über ein drittes Winkelstück (48) getragen wird.

8. Ausgleichsystem nach Anspruch 7, dadurch gekennzeichnet, dass das dem zweiten Arm (17) entsprechende Gegengewicht (31) von einer Verlängerung einer der zum zweiten Arm (17) parallelen Seiten (38) des ersten Paralellogramms getragen wird.

9. Ausgleichsystem nach Anspruch 1, dadurch gekennzeichnet, dass die Gelenkpuppe auf einem Drehtisch (61) in Form eines Winkelstücks ruht, dessen waagerechter Teil (62) mit einem Ringlager (60) endet, in dem der erste Arm (14) der Gelenkpuppe drehbar ist, der unterhalb des Ringlagers (60) durch einem geradlinigen Teil (50) verlängert ist, an dessen Ende das dem ersten Arm (14) entsprechende Gegengewicht (30) verstellbar befestigt ist und auf dem in einer Zwischenlage eine Stange (38) befestigt ist, welche zum zweiten Arm (17) parallel angeordnet ist und welche das dem zweiten Arm entsprechende Gegengewicht (31) in verstellbarer Lage trägt, wobei das Parallelogramm (14, 56, 38, 32) auf dem ersten Arm (14) und der Stange (38) angeordnet ist.

10. Ausgleichsystem nach Anspruch 9, dadurch gekennzeichnet, dass der zweite Arm (17) an seinem dem ersten Arm (14) entsprechenden Ende jenseits des Knies (15) durch einen starren Teil (56) verlängert ist, an dessen Ende sich eine der Umlenkriemenscheiben (26) vermittels eines zweiten Kardan-Gelenks (58) drehbar ist.

11. Ausgleichsystem nach Anspruch 10, dadurch gekennzeichnet, dass die der sich parallel zum ersten Arm (14) der Gelenkpuppe vom zweiten Ende des starren Teils (56) erstreckende Seite (32) des Ausgleichsparallelogramms an ihrem unteren Ende ein Winkelstück (48) trägt, an welchem das dem dritten Arm (20) entsprechende Gegengewicht (29) verstellbar befestigt ist und welches vermittels eines Kardan-Gelenks verschwenkbar und um diese Seite (32) drehbar ist.

## Claims

1. A balancing system for a training model with a least six axes, comprising at least a first vertical axis (11), a second horizontal axis (13), a first arm (14) pivoting on a vertical plane around the point of intersection of the first axis and the second axis at one of its ends, and the second end of which carries a third horizontal axis (16), a second arm (17) which pivots at one end on the same vertical plane around the common point of the first arm (14) and third axis (16), and the second end of which carries a fourth axis (19), a third arm (29), moving on a plane at right angles to the plane defined by the second arm (17) and the fourth axis (19), around their common point, at one of its ends, and the second end of which carries a polyarticulated probe (22) and a spray gun (24), making use of a counterweight to balance it, wherein the said balancing system is obtained by homothetic arrangement of the structure of the model with angle transmission (25, 26, 42, 41), and the homothetic centre is located at the intersection of the first axis (11) and second axis (13), characterized by the fact that the said homothetic arrangement with angle transmission (25, 26, 42, 41) is effected in relation to its second axis (13) and its first three arms (14, 17, 20), by the fact that it comprises at least one parallelogramm (33, 34, 37, 38) (35, 36, 32, 39), the sides of which are parallel respectively to the first arm (14) and second arm (17) of the model, and by the fact that one side (39) of the parallelogramm carrying the counterweight (29) for the third arm (20) is rotatably driven by a system of pulleys (25, 26) subordinated to the third arm.

2. A balancing system as defined in claim 1, wherein the counterweight (30) for the first arm (14) of the model is carried by an extension of the side (37, 14) of the parallelogram parallel to the side (32) carrying the counterweight (29) for the third arm (20) and the counterweight (31) for the second arm (17) is carried by the side (38) of the parallelogram parallel to this second arm and below the first horizontal axis (13) of the model, characterized by the fact that the side (37) of the parallelogram carrying the counterweight (30) for the first arm (14) comprises a first right-angle component (28, 37) pivoting around this first horizontal axis (13).

3. A balancing system as defined in claim 2, characterized by the fact that the side (34) of the parallelogram parallel to the side (38) carrying the counterweight (31) for the second arm (17) comprises a side upright of a second right-angle component (27, 34), rigidly integral with the third axis (16) of the model, and located on a plane defined by this third axis (16) and the second arm (17).

4. A balancing system as defined in claim 2, characterized by the fact that one of the angle-transmission pulleys (26) is mounted on a universal joint (45) at the intersection between the unattached end of the side upright (34) of the second right-angle component and the side (32) of the parallelogram carrying the counterweight (29) for the third arm (20).

5. A balancing system as defined in claim 1, characterized by the fact that it comprises two parallelograms (32, 35, 36, 39; 33, 34, 37, 38), positioned parallel and symmetrically in relation to the plane formed by the first two arms (14, 17) of the model.

6. A balancing system as defined in claim 5, characterized by the fact that in the case of two parallelograms positioned parallel and symmetrically in relation to the plane formed by the first two arms, these two parallelograms rest on two right-angle components, the middle part (28) of the first (36, 28, 37) of which combines with the first horizontal axis (13) of the model, and oscillates around this axis, while the middle part (27) of the second right-angle component (35, 27, 34) is rigidly integral with the second horizontal axis (16) of the model, and completely located on the plane formed by the second axis (16) and second arm (17).

7. A balancing system as defined in claim 6, characterized by the fact that the counterweight (30) for the first arm (14) is carried by an extension of one of the sides (37) of the first parallelogram, while the counterweight (29) for the third arm (20) is carried by an extension of one of the sides (32) of the second parallelogram, by means of a third right-angle component (48).

8. A balancing system as defined in claim 7, characterized by the fact that the counterweight (31) for the second arm (17) is carried by an extension of one of the sides (38) of the first parallelogram parallel to this second arm (17).

9. A balancing system as defined in claim 1, characterized by the fact that the model is carried by a rotation table (61), in the form of a right-angle bracket, the horizontal part (62) of which ends in an annular bearing (60) within which the first arm (14) swivels, the model extending below this annular bearing (60) in a straight part (50), to the end of which is attached, in an adjustable position, the counterweight (30) for the first arm (14), and on to which, in an intermediate position, is attached a rod (38) parallel to the second arm (17) and carrying, in an adjustable position, the counterweight (31) for the second arm, this parallelogram (14, 56, 38, 32) being constructed on this first arm (14) and this rod (38).

10. A balancing system as defined in claim 9, characterized by the fact that the end of this second arm (17) relative to the first arm (14) is extended beyond the bend (15), by a rigid portion (56), at the end of which swivels one of the angle-transmission pulleys (26), by means of a second universal joint (58).

11. A balancing system as defined in claim 10, characterized by the fact that the side (32) of the balancing parallelogram extending parallel to the first arm (14) of the model from the second end of this rigid portion (56) carries, at its lower end, a right-angle component (48), to which is attached, in an adjustable position, the counterweight (29) for the third arm (20), and which can swivel on a universal joint and rotate round this side (32).

1/3

FIG_1

FIG. 2

FIG_3